# FASCICULE DE BREVET EUROPEEN

(11) **EP 2 304 944 B1**
(45) Date de publication et mention de la délivrance du brevet: **19.10.2016**
(21) Numéro de dépôt: 09772576.6
(22) Date de dépôt: 17.07.2009
(51) Int. Cl.: H04N 21/266, H04N 21/4623, H04N 7/167

(54) **PROCÉDÉ DE PROTECTION DE DONNÉES DE SÉCURITÉ TRANSMISES PAR UN DISPOSITIF ÉMETTEUR À UN DISPOSITIF RÉCEPTEUR.**
VERFAHREN FÜR DEN SCHUTZ VON ÜBER EIN SENDEGERÄT AN EIN EMPFANGSGERÄT ÜEBRTRAGENEN SICHERHEITSDATEN
METHOD FOR PROTECTING SECURITY DATA TRANSMITTED BY A SENDING DEVICE TO A RECEIVING DEVICE

(30) Priorité: 01.07.2008 FR 0854457
(43) Date de publication de la demande: 06.04.2011
(73) Titulaire: Viaccess, 92057 Paris La Defense Cedex (FR)
(72) Inventeur: CHEVALLIER, Anthony, 78210 Saint Cyr L'ecole (FR); PHIRMIS, Mathieu, 92160 Antony (FR)
(74) Mandataire: Ilgart, Jean-Christophe
(86) Numéro de dépôt international: PCT/EP2009/059262
(87) Numéro de publication internationale: WO 2010/000876

(56) Documents cités:
- EP-A- 1 353 511
- WO-A-2007/089958
- US-A1- 2005 039 025
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936 cité dans la demande

## Description

### DOMAINE TECHNIQUE

L'invention se situe dans le domaine des télécommunications et concerne plus spécifiquement un procédé de protection de données de sécurité transmises par un dispositif émetteur à un dispositif récepteur.

L'invention concerne également un terminal émetteur agencé en tête de réseau d'un opérateur et configuré pour transmettre des messages utiles à un terminal récepteur.

L'invention concerne en outre un programme d'ordinateur mémorisé sur un support et destiné à être exécuté dans le terminal émetteur pour mettre en oeuvre le procédé selon l'invention côté émission.

L'invention concerne aussi un terminal récepteur configuré pour recevoir les messages transmis par ledit terminal émetteur, et un programme d'ordinateur mémorisé sur un support et destiné à être exécuté dans un terminal récepteur pour mettre en oeuvre le procédé selon l'invention.

L'invention vise plus précisément une amélioration de la protection des messages EMM envoyés par la tête de réseau d'un opérateur au système de réception d'un client. Elle s'applique cependant plus généralement à la protection de toute transmission de messages entre entités reliées par des réseaux de communication indépendamment de la nature et des caractéristiques desdites entités et desdits réseaux.

### ÉTAT DE LA TECHNIQUE ANTÉRIEURE

Avec le développement croissant de la distribution de contenus via des réseaux de communication, le risque de piratage de ces contenus devient une préoccupation importante aussi bien des fournisseurs que des destinataires de ces contenus.

Il est par conséquent primordial de protéger les contenus distribués contre, d'une part, les risques de détournement des droits d'accès associés à ces contenus, et d'autre part, contre la falsification de ces droits par un utilisateur.

En effet, dans les systèmes de contrôle d'accès de type CAS, les contenus distribués sont généralement embrouillés et leur désembrouillage est conditionné par des permissions logiques (un utilisateur peut accéder au contenu pendant une durée déterminée) combinées avec des clefs, appelées clefs d'exploitation, ces dernières permettant de déchiffrer d'autres messages qui permettent d'accéder aux contenus. Les permissions logiques et les clés d'exploitation sont généralement transmises aux terminaux récepteurs dans des messages de contrôle d'accès spécifiques EMM (pour Entitlement Management Message) et ECM (pour Entitlement Control Message) qui doivent eux-mêmes être protégés.

Pour une meilleure compréhension concernant la terminologie propre à ce domaine technique, on pourra se reporter au document suivant : « FUNCTIONAL MODEL OF A CONDITIONAL ACCESS SYSTEM » EBU REVIEW-TECHNICAL EUROPEAN BROADCASTING UNION. BRUSSELS, BE, no 266, 21 décembre 1995.

Un inconvénient de l'art antérieur provient du fait que ces messages peuvent être interceptés et analysés afin de déterminer les conditions d'accès et les clés nécessaires au désembrouillage des contenus.

Dans certains cas, l'opérateur peut souhaiter supprimer ou limiter les droits d'accès de certains destinataires. Dans ce cas, les messages EMM et ECM comportent des informations à cet effet.

Une autre forme de fraude consiste à filtrer ces messages transmis par l'opérateur pour empêcher leur prise en compte par le processeur de sécurité du terminal récepteur.

Par ailleurs, un pirate qui souhaite récupérer un message EMM, peut en déterminer les effets par l'expérience en le soumettant, par exemple, à un système de réception réservé à ses tests.

De plus, l'exploitation du système de contrôle d'accès par l'opérateur introduit des messages EMM d'ajout, de modification ou de suppression de droits à des dates spécifiques mensuelles ce qui est le résultat du traitement informatique par lots (« batch ») et peut contribuer à aider le pirate à faire la distinction entre les nouveaux messages EMM résultants de ce traitement et lui permet de construire une stratégie de filtrage.

Dans le cas où l'authentification des messages de contrôle d'accès se fait par une redondance cryptographique, cette mesure n'a pas d'effet dans les cas suivants :

- si le pirate a réussi à obtenir la clef ou s'il a réussi à obtenir une redondance cryptographique correcte. Ceci est particulièrement possible si ladite redondance cryptographique est symétrique. - si le pirate réussi à faire accepter un message, par le processeur de sécurité, comme comportant une redondance cryptographique correcte, et donc comme authentique. Cela est notamment possible en perturbant physiquement l'environnement de fonctionnement du processeur de sécurité du système de réception chargé de vérifier cette authenticité. Parmi ces perturbations, figurent par exemple l'élévation brusque de la température, la variation du signal d'alimentation électrique ou de l'horloge, l'exposition du composant à des impulsions laser, des émissions électromagnétiques ou des rayonnements de particules radioactives.

Dans le cas ou la protection des messages est réalisée par transmission au terminal récepteur d'une combinaison d'ordres positifs et négatifs, la mesure n'est intéressante que lorsque le pirate a quelque chose à perdre. En particulier, certaines attaques consistent à ajouter illégalement des droits dans des processeurs de sécurité officiels (cas dénommés MOSC, Modified Official SmartCard). Dans ce cas, le pirate ne subit une perte en filtrant les messages que si l'opérateur change les clefs d'exploitation.

Or il est préférable de ne pas transférer ces clefs dans un multiplex, afin de ne pas les exposer inutilement.

Il apparaît donc qu'il n'est pas toujours possible à un système de contrôle d'accès (CAS) de contrer les attaques des pirates, et en particulier de contrer la suppression de messages non désirés ou l'insertion de messages qui ne devraient pas être soumis au processeur de sécurité.

Le but de l'invention est de pallier les insuffisances des systèmes de contrôle d'accès de l'art antérieur décrits ci-dessus.

Le document US 2005/039025 A1 décrit une méthode pour contrôler un accès distant d'un client à un réseau ayant au moins un serveur.

Cette méthode comporte une communication entre le client et le serveur et une vérification par le serveur d'une clé dudit client lorsque ledit client est initialisé, lorsque ledit serveur requiert une vérification dudit client, lors d'un événement prédéterminé dont le timing est aléatoire, à l'expiration d'une période prédéterminée, ou encore à la déconnexion dudit client du serveur.

Le document EP-A- 1 353 511 A2 décrit un procédé de gestion de droit d'accès à des services de télévision pour empêcher l'utilisation d'une carte frauduleuse.

### EXPOSÉ DE L'INVENTION

L'invention est basée sur l'idée de d'entretenir un flux régulier de messages entre l'émetteur et le récepteur de sorte que des messages seront transmis même si l'opérateur n'en n'a pas formulé la requête.

L'invention préconise un procédé consistant à transmettre périodiquement audit récepteur, alternativement auxdites données de sécurité, des données neutres destinées à empêcher le filtrage desdites données de sécurité.

Cette régularité permet de brouiller la communication entre l'émetteur et le récepteur pour un observateur externe, rendant ainsi difficile le filtrage frauduleux des messages de sécurité. Elle peut en outre permettre au récepteur de détecter un éventuel filtrage de ces messages.

Selon l'implémentation réalisée de l'invention et la nature des messages secondaires de la séquence, elle peut être suivie d'opérations de détection ou de contre-mesure. La détection peut être de différents types, comme la mémorisation d'un log ou l'incrémentation d'un compteur de détections. Les contre-mesures peuvent par exemple consister en une invalidation temporaire ou en la destruction de la carte hébergeant le processeur de sécurité.

Selon une autre caractéristique de l'invention, la transmission desdites données neutres est déclenchée au bout d'un délai prédéterminé depuis la dernière transmission de données de l'émetteur vers le récepteur.

Préférentiellement, lesdites données neutres présentent une structure similaire à celles des données de sécurité.

Dans une variante, le procédé selon l'invention comporte les étapes suivantes :
- définir une durée DR séparant deux réceptions successives par le récepteur de données émises par l'émetteur, et,
- à un instant t donné, mesurer l'intervalle de temps TR écoulé depuis une réception par le récepteur de données émises par l'émetteur,
- si l'intervalle de temps TR est supérieur à ladite durée DR, transmettre un signal d'alarme à une unité de gestion de contre-mesure.

Dans cette variante, le procédé comporte en outre une étape consistant à compter le nombre de signaux d'alarme N transmis par le récepteur à ladite unité de gestion de contre-mesure, à mémoriser le nombre N dans ladite unité de gestion de contre-mesure, à définir un nombre SA de signaux d'alarmes représentant un seuil de déclenchement d'une sanction, à comparer le nombre SA au nombre N mémorisé dans l'unité de gestion de contre-mesure, et, à exécuter une procédure de contre-mesure si le nombre N dépasse le nombre SA.

Ladite procédure de contre-mesure peut être activée localement par le récepteur, ou à distance par l'émetteur, et consiste en une suspension temporaire ou définitive du fonctionnement du récepteur.

Dans une application particulière du procédé selon l'invention destinée à renforcer la sécurité d'un système de contrôle d'accès de type CAS, les données de sécurité et les données neutres sont transmises au récepteur dans des messages EMM.

Lesdites données de sécurité et lesdites données neutres peuvent être chiffrées afin de renforcer la sécurité. Cependant, elles peuvent être transmises sous forme non chiffrée.

Les données de sécurité et les données neutres peuvent être transmises au récepteur dans un flux de données comportant en outre des programmes audiovisuels embrouillés. Dans ce cas, la suspension temporaire ou définitive de fonctionnement consiste à ne plus traiter les messages EMM lors de la lecture d'un contenu multimédia.

Le procédé selon l'invention est mis en oeuvre au moyen d'un terminal émetteur agencé en tête de réseau d'un opérateur et configuré pour transmettre des messages utiles à un terminal récepteur parmi une pluralité de terminaux connectés au réseau dudit opérateur.

Ce terminal comporte des moyens pour stocker une durée maximale D pour le délai entre deux transmissions successives de messages dans ledit flux, des moyens pour mesurer le délai T écoulé depuis la dernière transmission d'un message, et, des moyens pour insérer dans ledit flux un message neutre si l'intervalle de temps T écoulé depuis la dernière transmission d'un message est supérieur ou égal à ladite durée D.

Le procédé selon l'invention est implémenté, côté tête de réseau, au moyen d'un programme d'ordinateur mémorisé sur un support et destiné à être exécuté dans le terminal émetteur pour stocker une durée maximale D pour le délai entre deux transmissions successives de messages dans ledit flux, mesurer le délai T écoulé depuis la dernière transmission d'un message, et, insérer dans ledit flux un message neutre si l'intervalle de temps T écoulé depuis la dernière transmission d'un message est supérieur ou égal à ladite durée D.

Le terminal récepteur selon l'invention comporte des moyens pour stocker une durée maximale DR supérieure ou égale à la durée D pour le délai entre deux réceptions successives de messages dans ledit flux, des moyens pour mesurer l'intervalle de temps TR écoulé depuis la dernière réception d'un message, et des moyens pour notifier le dépassement de délai à l'unité de déclenchement de contre-mesure si l'intervalle de temps TR écoulé depuis la dernière réception d'un message est supérieur ou égal à ladite durée DR.

Le procédé selon l'invention est implémenté, côté récepteur, au moyen d'un programme d'ordinateur mémorisé sur un support et destiné à être exécuté dans un terminal récepteur pour stocker une durée maximale DR ou égale à la durée D pour le délai entre deux réceptions successives de messages dans ledit flux, mesurer l'intervalle de temps TR écoulé depuis la dernière réception d'un message, et, notifier le dépassement de délai à l'unité de déclenchement de contre-mesure si l'intervalle de temps TR écoulé depuis la dernière réception d'un message est supérieur ou égal à ladite durée DR.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un organigramme général illustrant les étapes essentielles du procédé selon l'invention.
- la figure 2 représente schématiquement un organigramme illustrant la détection de filtrage de message par un terminal récepteur selon l'invention.

### EXPOSÉ DÉTAILLÉ DE MODES DE RÉALISATION PARTICULIERS

La description qui va suivre concerne une mise en oeuvre du procédé selon l'invention dans application particulière dans laquelle un terminal émetteur, agencé en tête de réseau d'un opérateur, transmet un contenu numérique à des récepteurs connectés au réseau dudit opérateur. Le contenu numérique est préalablement embrouillé par un mot de contrôle qui est transmis aux terminaux récepteurs dans des messages EMM.

L'opérateur peut utiliser différentes voies pour diffuser les messages EMM et différents modes d'adressage afin d'envoyer des messages à différentes audiences. Ainsi, un EMM-GA est destiné à tous les utilisateurs (GA - global audience), un EMM-S est destiné à un groupe d'utilisateurs (S - Shared), et un EMM-U est destiné à un utilisateur unique (U - User). Une voie est typiquement utilisée pour la diffusion des messages EMM de chacun de ces modes d'adressage.

Il est également possible, même dans le cas d'un mode d'adressage unique, d'avoir différentes voies EMM. Par exemple, sur téléphone mobile, certains messages peuvent être envoyés dans le même multiplex que celui qui contient la vidéo, et d'autres peuvent être véhiculés dans des SMS. Il est également probable que plusieurs utilisateurs doivent recevoir des messages. Chaque EMM-U envoyé à un utilisateur doit être considéré comme étant une voie EMM dans le contexte de l'invention

Afin d'entretenir un trafic régulier sur chacune des voies EMM ouvertes entre le terminal émetteur et chaque terminal récepteur, le procédé selon l'invention s'applique pour tout type de voie EMM, indépendamment du type de message transporté par cette voie.

Comme dans un système CAS classique, l'opérateur fait ses demandes d'envoi de messages au système CAS. Dans la suite de cette description, nous associerons, l'épithète « utile » à ces messages.

Si aucun message n'est associé à une voie EMM, celle-ci peut néanmoins rester active : ainsi, un message « fonctionnellement neutre » sera inséré par le système CAS dans la voie considérée. Un message fonctionnellement neutre est un message syntaxiquement valide et destiné à être analysé par les terminaux destinataires, mais qui ne contient pas d'information provenant de l'opérateur et en particulier pas de requête d'activation de traitement dans le terminal.

Les flux de messages en sortie du système CAS sont donc des flux de messages, composés de messages utiles ou neutres.

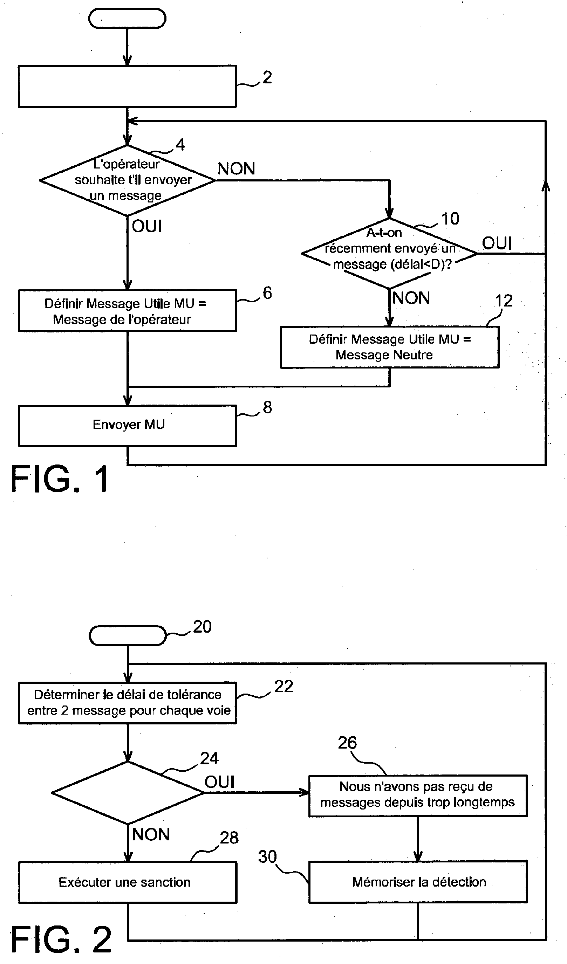

La figure 1 illustre schématiquement les étapes essentielles du procédé selon l'invention dans le cas où les messages utiles sont transmis dans des voies EMMs indépendantes ayant chacune son propre contexte de « constance » dans le flux.

L'étape 2 est une phase préalable de configuration par l'opérateur des terminaux émetteur et récepteur. Cette phase consiste à définir une durée maximale d'inactivité autorisée pour un flux donné, et pour un utilisateur donné, en cas de flux personnel. Une valeur par défaut de cette durée est fixée.

Il est à noter que l'opérateur peut modifier la durée maximale d'inactivité autorisée pour un flux donné. Par exemple, en cas de doute sur l'intégrité d'un utilisateur, l'opérateur peut forcer la nécessité de réception d'un message par jour sur la voie EMM-U.

Le terminal récepteur est alors configuré pour accepter un certain délai entre plusieurs messages, pour chaque voie qui lui est destinée.

Lors de l'exploitation, le programme d'ordinateur implanté dans le terminal d'émission en tête de réseau effectue le test de l'étape 4 consistant à déterminer si l'opérateur souhaite envoyer un message utile aux terminaux récepteurs.

Dans l'affirmative, un message utile est défini à l'étape 6, et à l'étape 8, le message utile est envoyé au terminal récepteur. Le processus est ensuite reproduit à partir de l'étape 4.

Dans la négative, un test est exécuté pour savoir si un message a été transmis au récepteur au bout d'un délai inférieur à la durée D définie à l'étape 2.

Dans l'affirmative, le processus est reproduit à partir de l'étape 4.

Dans la négative, un message neutre est défini à l'étape 12 puis transmis (étape 8) au terminal récepteur.

La figure 2 illustre schématiquement les étapes permettant la détection d'un filtrage frauduleux de messages utiles transmis par le terminal émetteur au terminal récepteur. Notons que l'opérateur peut activer ou désactiver la détection, par le terminal récepteur, du filtrage éventuel de messages utiles par envoie d'une commande spécifique au récepteur désigné.

Notons que pour mettre en oeuvre cette procédure de détection, l'opérateur définit une durée DR séparant deux réceptions successives par le récepteur de données émises par l'émetteur, et, à un instant t donné, le logiciel implanté dans le terminal récepteur mesure l'intervalle de temps TR écoulé depuis une réception par le récepteur de données émises par l'émetteur, et transmet si l'intervalle de temps TR est supérieur à ladite durée DR un signal d'alarme à une unité de gestion de contre-mesure.

Dans cet exemple, l'unité de gestion de contre-mesure est agencée dans le terminal récepteur de sorte que le terminal n'émet aucune information vers la tête de réseau.

A l'étape 20, l'opérateur envoie au récepteur une commande pour activer la détection de filtrage frauduleux.

A l'étape 22, le logiciel implanté dans le terminal récepteur mesure le délai entre deux messages successifs transmis dans la voie considérée et comparse, à l'étape 24, le délai mesuré à la durée DR.

Si l'intervalle de temps TR est supérieur à la durée DR, le terminal récepteur considère qu'il y a tentative de filtrage frauduleux et transmet cette alarme à l'unité de gestion de contre-mesure (étape 26) et l'unité de gestion de contre-mesure exécute une sanction (étape 30).

La sanction peut consister à ne plus traiter les messages ECM lors de la lecture d'un contenu multimédia ce qui rend impossible le désembrouillage de ce dernier.

Une autre sanction peut consister en l'effacement de l'ensemble des clefs d'exploitation et de l'ensemble des droits contenus dans le processeur de sécurité du terminal récepteur.

Dans une première variante, l'unité de gestion de contre-mesure n'exécute la procédure de sanction qu'après un nombre N prédéfini de signaux d'alarme transmis par le récepteur à l'unité de gestion de contre-mesure.

Dans une deuxième variante, l'unité de gestion de contre-mesure sélectionne graduellement la procédure de contre-mesure à appliquer selon le nombre de signaux d'alarmes consignées. La contre-mesure peut par exemple consister à ne plus traiter les ECM au bout de deux signaux d'alarme ou encore d'effacer les droits et les clefs d'exploitation du processeur de sécurité au bout de dix signaux d'alarme.

Si l'intervalle de temps TR est inférieur à la durée DR, à l'étape 28, le logiciel implanté dans le terminal récepteur exécute les commandes transmises dans les messages utiles.

Notons que le traitement par le terminal récepteur est exécuté selon les étapes suivantes :
- Lors de son démarrage ou de sa sortie de veille, le terminal se met en attente de messages EMM,
- A la réception d'un message EMM, qu'il s'agisse d'un message utile ou d'un message fonctionnellement neutre, celui-ci est également traité de manière connue dans l'art antérieur.

Dans le cas où la détection de filtrage frauduleux de messages est activée, le traitement est modifié de façon que lors de la réception d'un message EMM, sa date (d'émission ou de réception) est mémorisée, ou la date maximale attendue de la prochaine émission ou réception de messages EMM est calculée comme somme de la précédente date et de la durée maximale d'inactivité, puis mémorisée, et, à la réception d'un message EMM, si la date calculée est supérieure à la précédente date mémorisée d'émission ou de réception de messages EMM, de plus de la durée maximale d'inactivité, ou, si cette date est supérieure à la précédente date maximale attendue de la prochaine émission ou réception de messages EMM mémorisée, alors le terminal mémorise la détection du filtrage de message(s).

Il est à noter que les temps de traitement d'un message utile et d'un message neutre ne permettent pas de différencier le type de message.

Dans une troisième variante de l'invention, l'unité de gestion de contre-mesure est agencée en tête de réseau et contrôlée par l'opérateur. Dans ce cas, la procédure de contre-mesure consiste à configurer le terminal émetteur pour envoyer un message EMM de sanction à destination du terminal récepteur. Ce message EMM de sanction et traité par le terminal récepteur, et indique quelle contre-mesure ce dernier doit appliquer dans le cas ou plusieurs niveaux de contre-mesure sont prévus.

L'invention peut être mise en oeuvre de façon sélective, notamment, en fonction de la voie EMM considérée ou de façon commune à l'ensemble de ces voies, ou en fonction de la nature des messages utiles à diffuser.

## Revendications

1. Procédé de protection de données de sécurité transmises par un émetteur à un récepteur comportant une étape consistant à transmettre périodiquement audit récepteur, alternativement auxdites données de sécurité, des messages fonctionnellement neutres, syntaxiquement valides et destinés à être analysés par ledit récepteur, mais ne contenant pas de requête d'activation de traitement dans ledit récepteur, , **caractérisé en ce qu'**il comporte les étapes suivantes :
- définir (20) une durée DR séparant deux réceptions successives par le récepteur de données émises par l'émetteur, et,
- à un instant t donné, mesurer (22) l'intervalle de temps TR écoulé depuis une réception par le récepteur de données émises par l'émetteur,
- si l'intervalle de temps TR est supérieur à ladite durée DR, transmettre (28) un signal d'alarme à une unité de gestion de contre-mesure.

2. Procédé selon la revendication 1, dans lequel la transmission desdites données neutres est déclenchée au bout d'un délai prédéterminé depuis la dernière transmission de données de l'émetteur vers le récepteur.

3. Procédé selon la revendication 1, dans lequel lesdites données neutres présentent une structure similaire à celles des données de sécurité.

4. Procédé selon la revendication 1, comportant une étape consistant à compter le nombre de signaux d'alarme N transmis par le récepteur à ladite unité de gestion de contre-mesure et à mémoriser le nombre N dans ladite unité de gestion de contre-mesure.

5. Procédé selon la revendication 4, comportant en outre les étapes suivantes :
- définir un nombre SA de signaux d'alarmes représentant un seuil de déclenchement d'une sanction ;
- comparer le nombre SA au nombre N mémorisé dans l'unité de gestion de contre-mesure, et,
- exécuter une procédure de contre-mesure si le nombre N dépasse le nombre SA.

6. Procédé selon la revendication 5, dans lequel ladite procédure de contre-mesure est activée localement par le récepteur.

7. Procédé selon la revendication 5, dans lequel ladite procédure de contre-mesure est activée à distance par un émetteur.

8. Procédé selon l'une des revendications 6 ou 7, dans lequel la procédure de contre-mesure consiste en une suspension temporaire ou définitive du fonctionnement du récepteur.

9. Procédé selon l'une quelconque des revendications 1 à 8, dans lequel les données de sécurité et les données neutres sont transmises au récepteur dans des messages EMM.

10. Procédé selon la revendication 9, dans lequel les données de sécurité et les données neutres sont chiffrées.

11. Procédé selon l'une quelconque des revendications 1 à 10, dans lequel les données de sécurité et les données neutres sont transmises au récepteur dans un flux de données comportant en outre des programmes audiovisuels embrouillés.

12. Procédé selon la revendication 8, dans lequel la suspension temporaire ou définitive de fonctionnement consiste à ne plus traiter les messages ECM lors de la lecture d'un contenu multimédia.

13. Terminal émetteur agencé en tête de réseau d'un opérateur et configuré pour transmettre périodiquement à un récepteur dans un flux de données comportant en outre des programmes audiovisuels embrouillés, alternativement, des données de sécurité et des messages fonctionnellement neutres, syntaxiquement valides et destinés à être analysés par ledit récepteur, mais ne contenant pas de requête d'activation de traitement dans ledit récepteur, terminal émetteur **caractérisé en ce qu'**il comporte:
a) des moyens pour définir une durée maximale DR pour le délai entre deux transmissions successives de messages dans ledit flux,
b) des moyens pour transmettre la durée maximale DR au terminal récepteur,
c) des moyens pour mesurer le délai T écoulé depuis la dernière transmission d'un message au récepteur, et
d) des moyens pour insérer dans ledit flux un message fonctionnellement neutre si le délai T écoulé depuis la dernière transmission d'un message au récepteur est supérieur à la durée DR.

14. Programme d'ordinateur mémorisé sur un support et destiné à être exécuté dans le terminal émetteur selon la revendication 13 pour réaliser les étapes :
- définir une durée maximale DR pour le délai entre deux transmissions successives de messages dans ledit flux,
b) transmettre la durée maximale DR au terminal récepteur,
c) mesurer le délai T écoulé depuis la dernière transmission d'un message au récepteur, et
d) insérer dans ledit flux un message fonctionnellement neutre si le délai T écoulé depuis la dernière transmission d'un message au récepteur est supérieur à la durée DR .

15. Terminal récepteur configuré pour recevoir périodiquement d'un émetteur dans un flux de données comportant en outre des programmes audiovisuels embrouillés, alternativement, des données de sécurité et des messages fonctionnellement neutres, syntaxiquement valides et destinés à être analysés par ledit récepteur, mais ne contenant pas de requête d'activation de traitement dans ledit récepteur, terminal récepteur **caractérisé en ce qu'**il comporte :
a- des moyens pour stocker une durée DR séparant deux réceptions successives par le récepteur de données émises par l'émetteur, et,
b- des moyens pour mesurer (22) l'intervalle de temps TR écoulé depuis une réception par le récepteur de données émises par l'émetteur,
- des moyens pour notifier le dépassement de délai à une unité de déclenchement de contre-mesure si l'intervalle de temps TR est supérieur ou égal à ladite durée DR.

16. Programme d'ordinateur mémorisé sur un support et destiné à être exécuté dans un terminal récepteur selon la revendication 15 pour :
a- stocker une durée DR séparant deux réceptions successives par le récepteur de données émises par l'émetteur, et,
b- mesurer (22) l'intervalle de temps TR écoulé depuis une réception par le récepteur de données émises par l'émetteur,
- notifier le dépassement de délai à une unité de déclenchement de contre-mesure si l'intervalle de temps TR est supérieur ou égal à ladite durée DR.

## Patentansprüche

1. Verfahren zum Schutz von Sicherheitsdaten, welche von einem Sendegerät an ein Empfangsgerät übertragen werden, wobei das Verfahren einen Schritt aufweist, welcher darin besteht, an das Empfangsgerät, alternativ an die Sicherheitsdaten Nachrichten periodisch zu senden, welche funktionell neutral, syntaktisch gültig und dazu bestimmt sind, von dem Empfangsgerät analysiert zu werden, jedoch keine Anfrage zur Aktivierung einer Verarbeitung in dem Empfangsgerät enthalten, **dadurch gekennzeichnet, dass** das Verfahren die folgenden Schritte umfasst:
- Definieren (20) einer Dauer DR, welche zwei aufeinanderfolgende Empfänge von Daten durch das Empfangsgerät trennt, welche Daten von dem Sendegerät ausgegeben werden; und
- an einem vorgegebenen Zeitpunkt t, Messen (22) des Zeitintervalls TR, welches seit einem Empfang von Daten durch das Empfangsgerät verstrichen ist, welche Daten von dem Sendegerät ausgegeben werden;
- wenn das Zeitintervall TR länger ist als die Dauer DR, Senden (28) eines Warnsignals an eine Gegenmaßnahme-Verwaltungseinheit.

2. Verfahren nach Anspruch 1, in welchem die Übertragung von neutralen Daten am Ende einer festgelegten Zeitspanne seit der letzten Datenübertragung vom Sendegerät an das Empfangsgerät ausgelöst wird.

3. Verfahren nach Anspruch 1, in welchem die neutralen Daten einen ähnlichen Aufbau wie die Sicherheitsdaten aufweisen.

4. Verfahren nach Anspruch 1, welches einen Schritt aufweist, welcher darin besteht, die Anzahl von Alarmsignalen N, welche von dem Empfangsgerät an die Gegenmaßnahme-Verwaltungseinheit gesendet werden, zu zählen, sowie die Anzahl N in der Gegenmaßnahme-Verwaltungseinheit zu speichern.

5. Verfahren nach Anspruch 4, welches des Weiteren die folgenden Schritte umfasst:
- Definieren einer Anzahl SA an Alarmsignalen, welche eine Auslöseschwelle für eine Sanktion bzw. Strafmaßnahme darstellt;
- Vergleich der Anzahl SA mit der Anzahl N, welche in der Gegenmaßnahme-Verwaltungseinheit gespeichert ist; und
- Ausführen eines Gegenmaßnahme-Verfahrens, wenn die Anzahl N die Anzahl SA übersteigt.

6. Verfahren nach Anspruch 5, in welchem das Gegenmaßnahme-Verfahren lokal von dem Empfangsgerät aktiviert wird.

7. Verfahren nach Anspruch 5, in welchem das Gegenmaßnahme-Verfahren aus der Entfernung von einem Sendegerät aktiviert wird.

8. Verfahren nach einem der Ansprüche 6 oder 7, in welchem das Gegenmaßnahme-Verfahren aus einer zeitlichen oder endgültigen Unterbrechung des Betriebs des Empfangsgeräts besteht.

9. Verfahren nach einem der Ansprüche 1 bis 8, in welchem die Sicherheitsdaten und die neutralen Daten an das Empfangsgerät in Berechtigungsverwaltungsnachrichten (EMM-Nachrichten) gesendet werden.

10. Verfahren nach Anspruch 9, in welchem die Sicherheitsdaten und die neutralen Daten verschlüsselt sind.

11. Verfahren nach einem der Ansprüche 1 bis 10, in welchem die Sicherheitsdaten und die neutralen Daten in einem Datenstrom, welcher darüber hinaus verwürfelte audiovisuelle Programme umfasst, an das Empfangsgerät gesendet werden.

12. Verfahren nach Anspruch 8, in welchem die zeitliche oder endgültige Unterbrechung des Betriebs darin besteht, die ECM-Nachrichten während der Wiedergabe eines Multimediainhalts nicht zu verarbeiten.

13. Sendeterminal, welcher am Kopf des Netzes eines Betreibers angeordnet ist und konfiguriert ist, um an ein Empfangsgerät in einem Datenstrom, welcher darüber hinaus verwürfelte audiovisuelle Programme umfasst, abwechselnd Sicherheitsdaten und Nachrichten periodisch zu senden, die funktionell neutral, syntaktisch gültig und dazu bestimmt sind, von dem Empfangsgerät analysiert zu werden, jedoch keine Anfrage zur Aktivierung einer Verarbeitung in dem Empfangsgerät enthalten, wobei der Sendeterminal **dadurch gekennzeichnet ist, dass** er Folgendes aufweist:
a) Mittel zum Definieren einer maximalen Dauer DR für die Zeitspanne zwischen zwei aufeinanderfolgenden Übertragungen von Nachrichten in dem Datenstrom;
b) Mittel zum Senden der Maximaldauer DR an den Empfangsterminal;
c) Mittel zum Messen der Zeitspanne T, welche seit der letzten Übertragung einer Nachricht an das Empfangsgerät verstrichen ist; und
d) Mittel zum Einfügen einer funktionell neutralen Nachricht in den Datenstrom, wenn die Zeitspanne T, welche seit der letzten Übertragung einer Nachricht an das Empfangsgerät verstrichen ist, länger ist als die Dauer DR.

14. Computerprogramm, welches auf einem Speichermedium gespeichert ist und dazu bestimmt ist, auf dem Sendeterminal nach Anspruch 13 ausgeführt zu werden, um die folgenden Schritte zu realisieren:
a) Definieren einer maximalen Dauer DR für die Zeitspanne zwischen zwei aufeinanderfolgenden Übertragungen von Nachrichten in dem Datenstrom;
b) Senden der maximalen Dauer DR an den Empfangsterminal;
c) Messen der Zeitspanne T, welche seit der letzten Übertragung einer Nachricht an das Empfangsgerät verstrichen ist; und
d) Einfügen einer funktionell neutralen Nachricht in den Datenstrom, wenn die Zeitspanne T, welche seit der letzten Übertragung einer Nachricht an das Empfangsgerät verstrichen ist, länger ist als die Dauer DR.

15. Empfangsterminal, welcher konfiguriert ist, um von einem Sendegerät in einem Datenstrom, welcher darüber hinaus verwürfelte audiovisuelle Programme aufweist, abwechselnd Sicherheitsdaten und Nachrichten periodisch zu empfangen, die funktionell neutral, syntaktisch gültig und dazu bestimmt sind, von dem Empfangsgerät analysiert zu werden, jedoch keine Anfrage zur Aktivierung einer Verarbeitung in dem Empfangsgerät enthalten, wobei der Empfangsterminal **dadurch gekennzeichnet ist, dass** er Folgendes umfasst:
a) Mittel zum Speichern einer Dauer DR, welche zwei aufeinanderfolgende Empfänge von Daten durch das Empfangsgerät trennt, welche von dem Sendegerät ausgegeben werden;
b) Mittel zum Messen (22) des Zeitintervalls TR, welches seit einem Empfang von Daten durch das Empfangsgerät, welche von dem Sendegerät ausgegeben werden, verstrichen ist;
c) Mittel zur Mitteilung der Überschreitung der Zeitspanne an eine Gegenmaßnahme-Auslöseeinheit, wenn das Zeitintervall TR länger oder gleich der Dauer DR ist.

16. Computerprogramm, welches auf einem Speichermedium gespeichert ist und dazu bestimmt ist, auf einem Empfangsterminal nach Anspruch 15 ausgeführt zu werden, um:
a) eine Dauer DR zu speichern, welche zwei aufeinanderfolgende Empfänge von Daten durch das Empfangsgerät trennt, welche Daten von dem Sendegerät ausgegeben werden; und
b) das Zeitintervall TR zu messen (22), welches seit einem Empfang von Daten durch das Empfangsgerät verstrichen ist, welche Daten von dem Sendegerät ausgegeben werden;
c) die Überschreitung der Zeitspanne an eine Gegenmaßnahme-Auslöseeinheit zu melden, wenn das Zeitintervall TR länger oder gleich der Dauer DR ist.

## Claims

1. A protection method for security data transmitted by a transmitter to a receiver, comprising a step consisting of transmitting periodically to said receiver, alternately to said security data, functionally neutral messages with valid syntax and designed to be analysed by said receiver, but which does not contain any activation request for processing in said receiver, **characterised in that** it comprises the following steps:
- defining (20) a duration DR separating two successive receptions by the receiver of data transmitted by the transmitter, and,
- at a given instant t, measuring (22) the time interval TR passed since a reception by the receiver of data transmitted by the transmitter,
- if the time interval TR is greater than said duration DR, transmitting an alarm signal (28) to a counter-measure management unit.

2. The method according to claim 1, wherein the transmission of said neutral data is triggered after a predetermined time since the last transmission of data from the transmitter to the receiver.

3. The method according to claim 1, wherein said neutral data has a structure similar to that of the security data.

4. The method according to claim 1, comprising a step consisting of counting the number of alarm signals N transmitted by the receiver to said counter-measure management unit and of memorising the number N in said counter-measure management unit.

5. The method according to claim 4, further comprising the following steps:
- defining a number SA of alarm signals representing a threshold for triggering a sanction;
- comparing the number SA to the number N memorised in the counter-measure management unit, and,
- carrying out a counter-measure procedure if the number N is greater than the number SA.

6. The method according to claim 5, wherein said counter-measure procedure is activated locally by the receiver.

7. The method according to claim 5, wherein said counter-measure procedure is activated remotely by a transmitter.

8. The method according to one of claims 6 or 7, wherein the counter-measure procedure consists of a temporary or permanent suspension of the operation of the receiver.

9. The method according to any one of claims 1 to 8, wherein the security data and the neutral data are transmitted to the receiver in EMM messages.

10. The method according to claim 9, wherein the security data and the neutral data are encoded.

11. The method according to any one of claims 1 to 10, wherein the security data and the neutral data are transmitted to the receiver in a data flow further comprising encoded audiovisual programs.

12. The method according to claim 8, wherein the temporary or permanent suspension of the operation consists of no longer processing the ECM messages when a multimedia content is read.

13. A transmitter terminal installed at the head end of an operator network and configured to transmit periodically to a receiver, in a data flow further comprising encoded audio visual programs, alternately, security data and functionally neutral messages, with valid syntax and designed to be analysed by said receiver, but which does not contain any activation request for processing in said receiver, transmitter terminal **characterised in that** it comprises:
a) means for defining a maximum duration DR for the time between two successive transmissions of messages in said flow,
b) means for transmitting the maximum duration DR to the receiver terminal,
c) means for measuring the time T passed since the last transmission of a message to the receiver, and
d) means for inserting a functionally neutral message into said flow if the time interval T passed since the last transmission of a message to the receiver is greater than the duration DR.

14. A computer program stored on a support and designed to be run in the transmitter terminal according to claim 13 to perform the steps of:
- defining a maximum duration DR for the time between two successive transmissions of messages in said flow,
b) transmitting the maximum duration DR to the receiver terminal,
c) measuring the time T passed since the last transmission of a message to the receiver, and
d) inserting a functionally neutral message into said flow if the time interval T passed since the last transmission of a message to the receiver is greater than the duration DR.

15. A receiver terminal configured to receive periodically from a transmitter in a data flow further comprising encoded audio visual programs, alternately, security data and functionally neutral messages, with valid syntax and designed to be analysed by said receiver, but which does not contain any activation request for processing in said receiver, receiver terminal **characterised in that** it comprises:
a- means for storing a duration DR separating two successive receptions by the receiver of data transmitted by the transmitter, and,
b- means for measuring (22) the time interval TR passed since a reception by the receiver of data transmitted by the transmitter,
- means for notifying the exceeding of the time to a counter-measure trigger unit if the time interval TR is greater than or equal to a said duration DR.

16. A computer program stored on a support and stored on a support and designed to be run in a receiver terminal according to claim 15 for:
a- storing a duration DR separating two successive receptions by the receiver of data transmitted by the transmitter, and,
b- measuring (22) the time interval TR passed since a reception by the receiver of data transmitted by the transmitter,
- notifying the exceeding of the time to a counter-measure trigger unit if the time interval TR is greater than or equal to a said duration DR.
